# EUROPÄISCHE PATENTSCHRIFT

(11) **EP 0 878 221 B1**
(45) Veröffentlichungstag und Bekanntmachung des Hinweises auf die Patenterteilung: **05.11.2003**
(21) Anmeldenummer: 97810307.5
(22) Anmeldetag: 16.05.1997
(51) Int. Cl.: B01D 3/00, B01D 53/18

(54) **Verteilvorrichtung für eine Kolonne**
Distribution device for columns
Dispositif de distribution pour des colonnes

(43) Veröffentlichungstag der Anmeldung: 18.11.1998
(73) Patentinhaber: Sulzer Chemtech AG, 8404 Winterthur (CH)
(72) Erfinder: Zablonier, Nikolaus, 8400 Winterthur (CH); Moser, Felix, 8483 Kollbrunn (CH)
(74) Vertreter: Sulzer Management AG

(56) Entgegenhaltungen:
- EP-A- 0 142 603
- EP-A- 0 676 230
- DE-A- 1 542 528

## Beschreibung

Die Erfindung betrifft eine Verteilvorrichtung für eine Kolonne gemäss Oberbegriff von Anspruch 1; ferner eine Kolonne mit einer erfindungsgemässen Verteilvorrichtung und Verwendungen der Kolonne beziehungsweise der Verteilvorrichtung.

Es ist hinsichtlich Form und Werkstoff eine Vielzahl von Verteilvorrichtungen bekannt, mit denen Flüssigkeiten gleichmässig auf Packungen von Kolonnen aufgebracht werden können, wie z.B. aus EP-A-0 676 230 zu entnehmen ist. Für die Verteilung korrosiver Flüssigkeiten sind im Handel gläserne Zulaufeinsätze für eine punktförmige Flüssigkeitsaufgabe oder Ringbrausen bekannt. Die Ringbrause besteht aus einem ringförmigen Glasrohr, das ein Grundloch-Ausflusssystem aufweist. Zwischen den einzelnen Grundlöchern des Ausflusssystems bestehen in der Regel Unterschiede bezüglich der Geometrie ihrer Austrittsöffnungen, aufgrund derer sich unterschiedliche Ausflussraten ergeben und somit eine gleichmässige Verteilung praktisch nicht durchführbar ist. Zudem eignen sich Ringbrausen nur für Kolonnen mit relativ kleinen Durchmessern und es ist keine über den gesamten Querschnitt gleichmässige Verteilung der Austrittsöffnungen möglich.

Es ist Aufgabe der Erfindung, eine inerte Verteilvorrichtung zu schaffen, die sich für auf Metalle korrosiv wirkende Flüssigkeiten eignet und die gleiche Ausflussraten aller Verteildüsen oder eines Teils der Düsen ermöglicht. Ferner soll es möglich sein, für Kolonnen mit beliebig grossen Durchmessern Verteilvorrichtungen konstruieren zu können. Die durch Anspruch 1 definierte Vorrichtung löst diese Aufgaben.

Die erfindungsgemässe Verteilvorrichtung für eine Kolonne umfasst ein System von Verteilrohren und Düsen für ein Fluid. Die Austrittsöffnungen der Düsen sind vorzugsweise alle auf gleichem Niveau angeordnet. Zumindest zu einem Teil sind die Düsen aus gleichen Glasrohrstücken gefertigt. Jede Austrittsöffnung weist einen Rand auf, der durch eine mittels Fräseschnitt gebildete und sonst unbehandelte Kante oder eine unbehandelte Glasbruchkante gebildet ist. Zur Bildung des Fräseschnitts kann ein bei der Glasbearbeitung gebräuchliches, Diamantkörner tragendes Fräseblatt verwendet werden.

Soll jede Düse in gleichem Masse zur Verteilung der Flüssigkeit beitragen, so müssen alle Düsen aus gleichen Glasrohrstücken gefertigt und die Austrittsöffnungen auf gleichem Niveau angeordnet sein. In besonderen Fällen kann es aber vorteilhaft sein, für einzelne Düsen, beispielsweise für randständige, andere Ausflussraten vorzusehen. Dies kann durch andere Düsendurchmesser und/oder Anordnung der Austrittsöffnungen auf anderem Niveau erreicht werden.

Die erfindungsgemässe Verteilvorrichtung genügt Qualitätsanforderungen, die bisher mit metallischen Verteilern erreichbar waren. Diese Anforderungen betreffen folgende Punkte: Massgenauigkeit, insbesondere Horizontalität (± 0,1 %); Verteildichte (rund 60 bis 330 Ausflussöffnungen oder Tropfstellen pro m²; äquidistante Verteilung der Ausflussöffnungen; Ausflussraten aller Ausflussöffnungen praktisch gleich gross, so dass auch schwierigste Destillationsanwendungen möglich sind.

Die abhängigen Ansprüche 2 bis 7 betreffen vorteilhafte Ausführungsformen der erfindungsgemässen Vorrichtung. Gegenstand des Anspruchs 8 ist eine Kolonne mit solchen Vorrichtungen. Die Ansprüche 9 und 10 betreffen Verwendungen der Kolonne beziehungsweise der Vorrichtung gemäss der Erfindung.

Mit der erfindungsgemässen Vorrichtung kann auch - insbesondere zur Durchführung einer Sorption - eine erste Flüssigkeit in eine mit einer zweiten Flüssigkeit gefüllten Kolonne eingetragen werden. Statt einer Flüssigkeit kann auch ein Gas in eine Kolonne, die mit Flüssigkeit gefüllt ist, eingetragen werden.

Nachfolgend wird die Erfindung anhand der Zeichnungen erläutert. Es zeigen:
- Fig. 1: eine erfindungsgemässe Verteilvorrichtung, die eine aus Glas gefertigte Einheit bildet,
- Fig. 2: zwei Düsen der Vorrichtung,
- Fig. 3: einen Ausschnitt aus einem Verteilrohr, das aus Kunststoff besteht,
- Fig. 4: einen Querschnitt durch ein weiteres Verteilrohr und
- Fig. 5: eine Verbindungsstelle einer mehrteiligen erfindungsgemässen Vorrichtung.

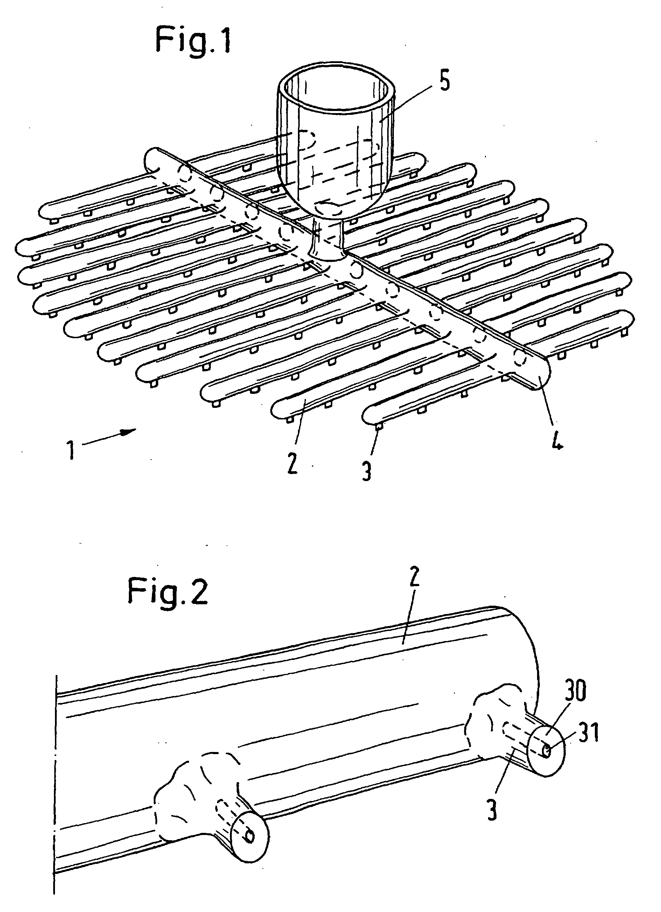

Die in Fig.1 dargestellte Verteileinrichtung 1 besteht aus Glas und weist folgenden Aufbau auf: eine Vielzahl von parallelen Verteilrohren 2 mit Düsen 3, die erfindungsgemäss aus Glasrohrstücken hergestellt sind; ein den Rohren 2 vorgelagertes Zulaufrohr 4; und eine Glocke 5, der die zu verteilende Flüssigkeit zugeführt werden kann und in der sich die Flüssigkeit bis zu einem von der Abflussrate abhängigen Niveau aufstaut. Die Düsen sind alle auf gleichem Niveau angeordnet, so dass sich jeweils gleiche Austrittsbedingungen ergeben.

Fig.2 zeigt ein auf der Seite liegendes Verteilrohr 2, an dem zwei als Düsen dienende Glasrohrstücke 3 durch Schmelzen des Glases angebracht sind. Die die Austrittsöffnung 31 enthaltende Stirnseite 30 des Rohrstücks 3 ist eine unbehandelte Fräseschnitt- oder Glasbruchfläche. Dank diesem Merkmal, dass die Kanten der Austrittsöffnungen 31 durch mittels Fräseschnitt oder Glasbruch gebildete und sonst unbehandelte Kanten gebildet sind, liegen bei allen Düsen 3 praktisch gleiche Austrittsbedingungen für die zu verteilende Flüssigkeit vor. Somit ist eine gleichmässige Verteilung der Flüssigkeit ohne besonderen Aufwand gewährleistet. Mit Vorteil verwendet man für die Herstellung der Glasrohrstücke 3 handelsübliche Kapillarrohre, die einen präzis ausgebildeten Innendurchmesser haben. Die Glasrohrstücke 3 sind nach dem Anschmelzen auf jeweils gleiche Länge gefräst worden.

Die Glasrohrstücke 3 können im Verteilrohr 2 auch so angeordnet sein, dass ihre Eintrittstellen (ebenfalls mit Bruchflächen oder gefrästen Schnittflächen) in den Mittenbereich des Rohrs 2 zu liegen kommen. Bei dieser Anordnung können sich unterhalb der Eintrittstellen Schmutzpartikel absetzen. Düsenkanäle, die schmutzempfindlich sind, werden dadurch seltener von Schmutzpartikeln belastet, und das Auftreten von Beeinträchtigungen des Durchflusses wird somit reduziert.

Nicht dargestellt in Fig.1 sind Abstützstellen, deren Zweck es ist, die Vorrichtung in der Kolonne auf einen Träger aufzusetzen. Solche Abstützstellen bestehen mit Vorteil aus rohr- oder glockenförmigen Teilen, die an der unteren Seite der Verteilrohre 2 angeschmolzen sind.

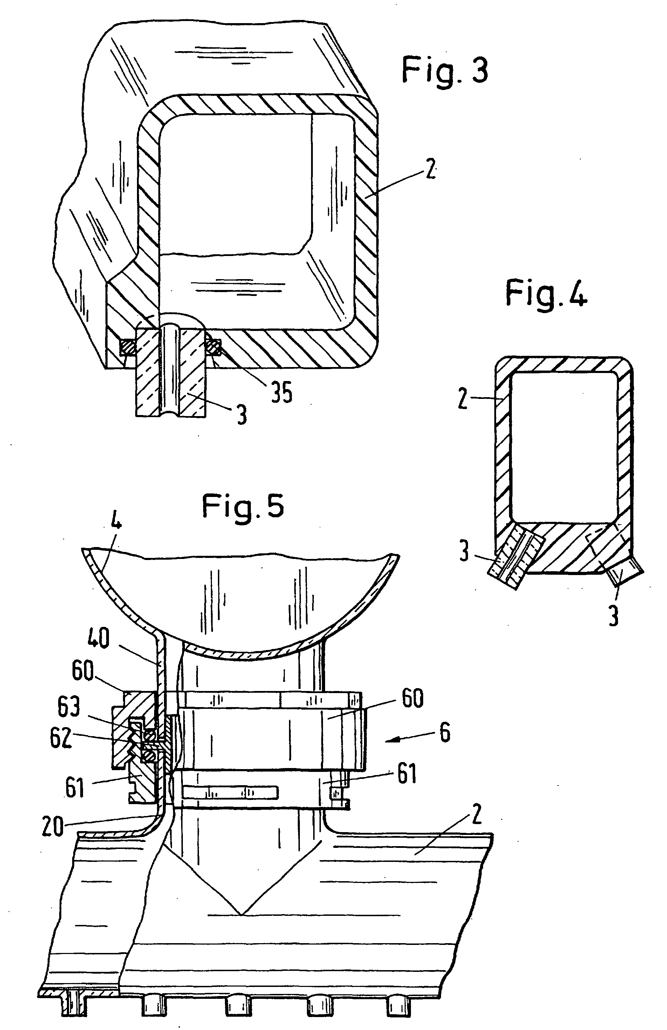

Die Verteilrohre 2 können auch aus extrudierten Kunststoffrohren hergestellt sein. Fig.3 zeigt ein Ausführungsbeispiel: Die Glasrohrstücke 3 sind in dazu ausgebildete Öffnungen eingesteckt und mit einem Dichtungsring 35 fixiert. Weitere mögliche Werkstoffe anstelle von Kunststoff sind keramische Materialien.

Wie Fig.4 zeigt, kann pro Verteilrohr 2 auch mehr als eine Reihe von Düsen 3 vorgesehen sein. In dem dargestellten Ausführungsbeispiel sind die Düsen 3 versetzt angeordnet; und sie sind geneigt statt senkrecht ausgerichtet.

Die erfindungsgemässe Verteilvorrichtung kann auch mehrteilig ausgebildet sein, wobei die Teile lösbar miteinander verbunden sind. Fig.5 zeigt eine derartige Verbindung 6 zwischen einem Verteilrohr 2 mit Düsen 3 und einem Zulaufrohr 4. Ein Stutzen 20 des Rohrs 2 wird mit einem Stutzen 40 des anderen Rohrs 2b verbunden. Die Verbindung 6 setzt sich aus folgenden Komponenten zusammen: einem oberen Teil 60 und einem unteren Teil 61, die über Gewindestücke zusammengeschraubt sind; einem Zwischenstück 62; sowie zwei Dichtungsringen, mit welchen die Ränder der beiden Stutzen 20 und 40 einerseits gegen aussen abgedichtet werden und andererseits eine dichte Verbindung zusammen mit dem Zwischenstück 62 hergestellt wird. Für Kolonnen mit grossen Durchmessern müssen die Verteiler in Form von zusammengesetzten Vorrichtungen konstruiert werden.

Für die Durchmesser der Düsenaustrittsflächen 31 sind Werte im Bereich zwischen rund 0,3 mm und 10 mm vorgesehen. Mit Vorteil beträgt die frei stehende Länge der Glasrohrstücke 3 rund 10 bis 15 mm.

Für Kolonnen mit einer geordnet strukturierten Packung ist die erfindungsgemässe Verteilvorrichtung besonders vorteilhaft. Bei solchen Kolonnen werden die Düsen derart angeordnet, dass der Packung bezüglich der Flüssigkeits- oder Fluidverteilung gleich grosse oder weitgehend gleich grosse Teilbereiche zuordenbar sind. Im Randbereich ergeben sich in der Regel Abweichungen von einer Gleichverteilung.

Die erfindungsgemässe Verteilvorrichtung besteht ganz aus Glas oder aus Glas und beispielsweise Kunststoff; sie enthält keine metallischen Teile. Kolonnen mit Solchen Verteilvorrichtungen eignen sich besonders gut zur Durchführung eines Stoffaustausches zwischen einem Gas und einer Flüssigkeit, wobei eine dieser Phasen oder beide einen Stoff enthalten, der auf Metalle korrosiv wirkt. Selbstverständlich müssen in einer solchen Kolonne auch die übrigen Einbauten aus Werkstoffen bestehen, die bezüglich den zu behandelnden Stoffen inert sind.

## Patentansprüche

1. Verteilvorrichtung für eine Kolonne, mit einem System von Verteilrohren (2, 4) und Düsen (3) für ein Fluid, wobei die Austrittsöffnungen (31) der Düsen vorzugsweise alle auf gleichem Niveau angeordnet sind,
**dadurch gekennzeichnet, dass** zumindest ein Teil der Düsen aus gleichen Glasrohrstücken (3) gefertigt sind und dass jede Austrittsöffnung einen Rand aufweist, der durch eine mittels Fräseschnitt gebildete und sonst unbehandelte Kante oder eine unbehandelte Glasbruchkante gebildet ist.

2. Verteilvorrichtung nach Anspruch 1, **dadurch gekennzeichnet, dass** Glasrohrstücke (3) an mindestens einem gläsernen Verteilrohr (2) durch Schmelzen angebracht sind und die Glasrohrstücke nach dem Anbringen auf gleiche Länge gefräst worden sind.

3. Verteilvorrichtung nach Anspruch 2, **dadurch gekennzeichnet, dass** ein Zulaufrohr (4) und das System von Verteilrohren (2) eine aus Glas gefertigte Einheit (1) bilden.

4. verteilvorrichtung nach Anspruch 2, **dadurch gekennzeichnet, dass** sie mehrteilig ausgebildet ist und dass die Teile (2, 4) lösbar miteinander verbunden sind.

5. Verteilvorrichtung nach einem der Ansprüche 1 bis 4, **dadurch gekennzeichnet, dass** der Durchmesser der Düsen (3) im Bereich zwischen rund 0,3 mm und 10 mm liegt.

6. Verteilvorrichtung nach einem der Ansprüche 1 bis 5, **dadurch gekennzeichnet, dass** die Glasrohrstücke (3) im frei stehenden Bereich rund 10 bis 15 mm lang sind.

7. Verteilvorrichtung nach einem der Ansprüche 1 bis 7, **dadurch gekennzeichnet, dass** die Glasrohrstücke (3) im Verteilrohr (2) so angeordnet sind, dass ihre Eintrittstellen in den Mittenbereich des Rohrs zu liegen kommen.

8. Kolonne mit einer Verteilvorrichtung gemäss einem der Ansprüche 1 bis 7, mit einer geordnet strukturierten Packung und mit Düsen (3), die so angeordnet sind, dass der Packung gleich grosse Teilbereiche bezüglich der Fluidverteilung und einer Mehrheit der Düsen zuordenbar sind.

9. Verwendung einer Kolonne gemäss Anspruch 8 zur Durchführung eines Stoffaustausches zwischen einem Gas und einer Flüssigkeit, die mittels der Verteilvorrichtung der Packung zugeführt wird, wobei die Flüssigkeit auf Metalle korrosiv wirkt und die Packung aus einem bezüglich der Flüssigkeit inerten Werkstoff besteht.

10. Verwendung einer Verteilvorrichtung gemäss einem der Ansprüche 1 bis 7, insbesondere zur Durchführung einer Sorption, wobei mit der Verteilvorrichtung eine erste Flüssigkeit oder ein Gas in eine mit einer zweiten Flüssigkeit gefüllten Kolonne eingetragen wird.

## Claims

1. Distributor device for a column, including a system of distributor tubes (2, 4) and nozzles (3) for a fluid, with the outlet apertures (31) of the nozzles preferably all being arranged at the same level
**characterised in that** at least some of the nozzles are manufactured of like glass tube pieces (3); and **in that** each outlet aperture has a border which is formed by an edge produced by means of a milling cut and is otherwise untreated or by an untreated, broken glass edge.

2. Distributor device in accordance with claim 1 **characterised in that** glass tube pieces (3) are attached to at least one glass distributor tube (2) by fusion; and **in that** the glass tube pieces have been milled to the same length after being attached.

3. Distributor device in accordance with claim 2 **characterised in that** an inlet tube (4) and the system of distributor tubes (2) form a unit (1) manufactured of glass.

4. Distributor device in accordance with claim 2 **characterised in that** it is formed of a plurality of parts; and **in that** the parts (2, 4) can be releasably connected to one another.

5. Distributor device in accordance with one of the claims 1 to 4 **characterised in that** the diameter of the nozzles (3) lies in the range between about 0.3 mm and 10 mm.

6. Distributor device in accordance with one of the claims 1 to 5 **characterised in that** the glass tube pieces (3) are about 10 to 15 mm long in the free standing region.

7. Distributor device in accordance with one of the claims 1 to 6 **characterised in that** the glass tube pieces (3) are arranged in the distributor tube (2) in such a manner that their entry points come to lie in the middle region of the tube.

8. Column with a distributor device in accordance with one of the claims 1 to 7 including an ordered, structured, packing and nozzles (3) which are arranged in such a manner that equally large partial regions with respect to the fluid distribution and a majority of the nozzles can be associated with the packing.

9. Use of a column in accordance with claim 8 for performing an exchange of substances between a gas and a liquid which is supplied to the packing by means of the distributor device, with the liquid acting corrosively on metals and the packing consisting of a material which is inert with respect to the liquid.

10. Use of a distributor device in accordance with one of the claims 1 to 7, in particular for carrying out a sorption process, with a first liquid or a gas being introduced by means of the distributor device into a column filled with a second liquid.

## Revendications

1. Dispositif répartiteur pour une colonne, avec un système de tuyaux répartiteurs (2, 4) et des buses (3) pour un fluide, les orifices de sortie (31) des buses étant disposés de préférence tous au même niveau,
**caractérisé en ce qu'**au moins une partie des buses est fabriquée à partir de bouts de tuyau de verre (3) identiques et **en ce que** chaque orifice de sortie présente un bord qui est constitué par une arête formée au moyen d'une coupe de fraisage et non traitée autrement ou une arête de cassure de verre non traitée.

2. Dispositif répartiteur selon la revendication 1, **caractérisé en ce que** des bouts de tuyau de verre (3) sont appliqués par fusion sur au moins un tuyau répartiteur (2) en verre et les bouts de tuyau de verre ont été fraisés à la même longueur après l'application.

3. Dispositif répartiteur selon la revendication 2, **caractérisé en ce qu'**un tuyau d'arrivée (4) et le système de tuyaux répartiteurs (2) forment une unité (1) fabriquée en verre.

4. Dispositif répartiteur selon la revendication 2, **caractérisé en ce qu'**il est conçu en plusieurs parties et **en ce que** les parties (2, 4) sont reliées entre elles de façon amovible.

5. Dispositif répartiteur selon l'une quelconque des revendications 1 à 4, **caractérisé en ce que** le diamètre des buses (3) se situe dans la plage comprise entre environ 0,3 mm et 10 mm.

6. Dispositif répartiteur selon l'une quelconque des revendications 1 à 5, **caractérisé en ce que** les bouts de tuyau de verre (3) sont environ 10 à 15 mm de longueur dans la zone libre.

7. Dispositif répartiteur selon l'une quelconque des revendications 1 à 7, **caractérisé en ce que** les bouts de tuyau de verre (3) sont disposés dans le tuyau répartiteur (2) de telle sorte que leurs points d'entrée arrivent dans la zone centrale du tuyau.

8. Colonne avec un dispositif répartiteur selon l'une quelconque des revendications 1 à 7, avec un garnissage structuré de façon ordonnée et avec des buses (3), qui sont disposées de telle sorte que des zones partielles de grandeur identique peuvent être attribuées au garnissage en ce qui concerne la répartition du fluide et une grande partie des buses.

9. Utilisation d'une colonne selon la revendication 8 pour la réalisation d'un échange de matières entre un gaz et un liquide, qui est amené à l'emballage au moyen du dispositif répartiteur, le liquide agissant de façon corrosive sur des métaux et le garnissage étant à base d'un matériau inerte par rapport au liquide.

10. Utilisation d'un dispositif répartiteur selon l'une quelconque des revendications 1 à 7, en particulier pour la réalisation d'une sorption, un premier liquide ou un gaz étant introduit avec le dispositif répartiteur dans une colonne remplie d'un second liquide.
